# EUROPEAN PATENT SPECIFICATION

(11) **EP 3 310 710 B1**
(45) Date of publication and mention of the grant of the patent: **24.04.2019**
(21) Application number: 16728994.1
(22) Date of filing: 15.06.2016
(51) Int. Cl.: C01B 25/45, C01B 25/455, H01M 4/58, H01M 4/505, H01M 10/054, C01G 45/12, C01G 49/00, C01G 51/00, C01G 53/00

(54) **METHOD FOR PRODUCING A POSITIVE ELECTRODE MATERIAL COMPRISING AT LEAST ONE NA-BASED SOLID CRYSTALLINE PHASE BY BALL MILLING USING NA3P**
VERFAHREN ZUR HERSTELLUNG EINES POSITIVELEKTRODENMATERIALS MIT MINDESTENS EINER NA-BASIERTEN FESTEN KRISTALLINEN PHASE DURCH KUGELFRÄSUNG MITHILFE VON NA3P
PROCÉDÉ DE FABRICATION D'UN MATÉRIAU D'ÉLECTRODE POSITIVE COMPRENANT AU MOINS UNE PHASE CRISTALLINE SOLIDE À BASE DE NA PAR BROYAGE À BOULETS DE NA3P

(30) Priority: 19.06.2015 EP 15305957; 19.10.2015 EP 15306675
(43) Date of publication of application: 25.04.2018
(73) Proprietor: Centre National de la Recherche Scientifique, 75016 Paris (FR); Sorbonne Université, 75006 Paris (FR); College de France, 75005 Paris (FR)
(72) Inventor: ZHANG, Biao, 75231 Paris Cedex 05 (FR); DUGAS, Romain, 75231 Paris (FR); TARASCON, Jean-Marie, 91540 Mennecy (FR)
(74) Representative: Lavoix
(86) International application number: PCT/EP2016/063778
(87) International publication number: WO 2016/202874

(56) References cited:
- SINGH GURPREET ET AL: "An approach to overcome first cycle irreversible capacity in P2-Na2/3[Fe1/2Mn1/2]O2", ELECTROCHEMISTRY COMMUNICATIONS, vol. 37, December 2013 (2013-12), pages 61-63, XP028782000, ISSN: 1388-2481, DOI: 10.1016/J.ELECOM.2013.10.008 cited in the application
- VERÓNICA PALOMARES ET AL: "Update on Na-based battery materials. A growing research path", ENERGY & ENVIRONMENTAL SCIENCE, vol. 6, no. 8, 1 January 2013 (2013-01-01) , page 2312, XP055189499, ISSN: 1754-5692, DOI: 10.1039/c3ee41031e

## Description

The present invention relates to a method for producing a positive electrode material comprising at least one Na-based solid crystalline phase selected in the group consisting of Na-based crystalline P'2-phases, Na-based solid crystalline phases of formula Na₍₃₊ₓ₎V₂(PO₄)₃ with 0<x≤3 and Na-based solid crystalline phases of formula Na_{(3+y)}V₂(PO₄)₂F₃ with 0<y≤3, for a battery using sodium ions as electrochemical vector, said method using a ball milling process involving Na₃P as starting material.

There are batteries called lithium-ion (Na-ion) batteries that use a carbon derivative at the negative electrode. The carbon derivative may be a "soft" carbon, containing primarily sp² carbon atoms, a "hard" carbon containing primarily sp³ carbon atoms, or an intermediate variety of carbon in which coexist variable proportions of sp² carbon atoms and sp³ carbon atoms. The carbon derivative may also be natural graphite or artificial graphite, optionally covered with ungraphitized carbon which protects against exfoliation during electrochemical operation. The major drawback of these materials is the consumption of a part of the current, and hence of lithium/sodium ions originating from the positive electrode, during the first charge, the result of this being the formation, on the negative electrode of a protective layer, called passivating layer (or SEI layer), which prevents subsequent reaction of the electrolyte on the negative electrode into which the lithium/sodium is inserted. This phenomenon gives rise to a decrease in the energy density of the battery, since the lithium rendered unusable is withdrawn from the positive-electrode material, which has a low specific capacity (90 - 210 mAh.g⁻¹). In practice, between 5% and 25% of the initial capacity is lost in this way.

Also known is the use as negative-electrode material of transition metal fluorides, oxides, sulfides, nitrides, or phosphides, or of lithium and transition metal fluorides, oxides, sulfides, nitrides, or phosphides, said transition metals being selected from T^{M} = V, Cr, Mn, Fe, Co, Ni, Cu, and Zn. By reaction with the lithium, these materials form a two-phase system comprising the metal T^{M} and, respectively, LiF, Li₂O, Li₂S, Li₃N, or Li₃P, in the form of a mixture of particles having nanometric sizes. These reactions are called "conversion" reactions and exhibit a substantial capacity (400 to 800 mAh.g⁻¹). The low size of the grains in the two-phase mixture formed endows this reaction with a certain reversibility, since transport by diffusion/migration need be ensured only over distances of a few nanometers. However, the electrodes of this type, whose design and implementation are simple, have the drawback of an irreversible first-cycle capacity of 30% to 45%, thereby inhibiting their commercial development.

In addition, large-scale application of Li ion batteries, are facing challenges related to scarcity of lithium resources and high cost.

The most appealing alternative to Li-ion batteries regarding chemical element abundance and cost is by all means sodium. Batteries using sodium ions as electrochemical in place of lithium ions are employed for use in place of lithium in applications where the stored energy density is less critical than for portable electronics or automotive transport, more particularly for the management of renewable energies. Such awareness has prompted the revival of the Na-ion battery concept with intense activity devoted to the search of highly performing electrode material. As in Li-ion batteries, regarding Na-ion negative electrode, carbon is the most attractive together with the use of Na-alloys with among them the NaₓSb phases being the most performing one. Turning now to positive electrodes, polyanionic compounds such as NaFePO₄, Na₃V₂(PO₄)₂F₃, Na₂Fe₂(SO₄)₃, Na₃V₂(PO₄)₃ or layered compounds such as Na-based nickel manganese cobalt oxide phases (NMC phases) such as NaNi_{1/3}Mn_{1/3}Co_{1/3}O₂ or P2-layered phases such as Na_{2/3}[Fe_{1/2}Mn_{1/2}]O₂ phase which contain about 0.7 Na ions (Na⁺) per formula unit, are presently most studied candidates. The "hard carbons", which can also be used as negative-electrode material for Na-ions batteries, can give reversible Na⁺ insertions of the order of 200 mAh.g⁻¹, but here as well the formation of a passivating layer is necessary and represents a loss of 15% to 40% on the first cycle.

Research has then been carried out into means of compensating this loss of sodium, which in practice diminishes the energy density, since it is technically not possible to remove the fraction of positive-electrode material which has served to form the passivating layer, said fraction remaining as a dead weight during the subsequent operation of the battery.

The best theoretical way to fight cycle irreversible capacity in Na-ion batteries would be somewhat similar to what has been done for Si electrodes in Li-ion batteries in which Si in contact with a thin Li foil by pressure leads *in situ* in the cell to the formation of LiₓSi once the electrolyte is added, LiₓSi then compensate to loss of Li ions during the formation of the passivating layer of the negative electrode. However, this solution cannot be applied to Na-ion batteries due to the practical limitation of making Na foils.

It is also not possible to simply add metallic sodium in positive electrode composite materials because metallic sodium is very reactive with moisture. Na is very difficult to deal with because sticking to spatula, tweezers and so on. Moreover, only bulk Na is available without any powder form existed.

From EP-0 966 769 the addition is known of an alkali metal oxo carbon to the active material of a positive electrode in a battery which operates by circulation of lithium ions between the electrodes, for the purpose of at least partly remedying the loss in capacity during the 1st cycling, resulting from the formation of a passivating layer. However, during the 1st cycling of the battery, oxidation of the oxo carbon produces anion radicals which are soluble in an electrolyte, the effect of this being to degrade the negative electrode. There is indeed improvement in the initial capacity, but at the expense of the lifetime of the battery.

Proposals have also been made to add NaN₃ as sacrificial salt in positive electrode composite materials comprising Na_{2/3}[Fe_{1/2}Mn_{1/2}]O₂ as positive electrode active material, acetylene black (AB) as electronic conducting agent and polyvinylidene difluoride (PVDF) as binding agent in a ratio Na_{2/3}[Fe_{1/2}Mn_{1/2}]O₂:NaN₃:AB:PVDF = 75:5:15:10, said composite being coated on an aluminum foil and Na metal being used as negative electrode with a glass microfiber used as separator. 1 M NaClO₄ in a solvent mixture (ethylenecarbonate / prolylenecarbonate 1:1) was used as electrolyte in the electrochemical cell testing (Singh G. et al., Electrochemistry Communications, 2013, 37, 61-63). This positive electrode composite material was tested in comparison with a positive electrode composite material which was identical except that it did not comprise NaN₃. For the testing cell in which the positive electrode material did not comprise NaN₃, the first charge capacity was observed to be 139 mAh/g, which corresponds to the extraction of about 0.45 sodium ions from the structure. While discharging, more sodium was inserted back in the structure, hence a high discharge capacity of 197 mAh/g was obtained. First cycle missing capacity is thus 59 mAh/g. However in the same configuration, if Na_{2/3}[Fe_{1/2}Mn_{1/2}]O₂ was used as positive electrode active material with hard carbon or any other material without Na as negative electrode active material, then the apparent capacity of Na_{2/3}[Fe_{1/2}Mn_{1/2}]O₂ would have not been achieved because carbon is not a Na reservoir and the need to built a SEI, making this unfeasible. By comparison, when NaN₃ was present at an amount of 5 w% in the positive electrode composite material, the missing capacity was reduced to 27 mAh/g, demonstrating an improvement of about 50%. This enhancement is due to the decomposition of NaN₃ into Na and N₂ during the first cycle. However, the use of NaN₃ as sacrificial salt in the positive electrode composite material to alleviate irreversible capacities in Na-ion batteries is not totally satisfactory because the presence of N₃⁻ into the electrode material are prejudicial to the performances of the battery. In addition, in NaN₃, the use of 3 N atoms are needed to bring only one Na atom to the composite, which has the drawback of adding weight to the corresponding electrode composite material and thus to the Na-ion battery incorporating such an electrode. Finally, the production of N₂ volatile species during the first charge of the battery is prejudicial to the cohesion of the electrode material.

There is therefore still a need of providing Na-ion batteries exhibiting improved performances in terms of irreversible capacity during the first charge, while being at the same time safe and not too heavy.

Thus the aim of the present invention is to provide a battery which uses sodium ions as electrochemical vector, with its operation enhanced by reduction in the loss of capacity during the first discharge/charge cycle.

This aim is achieved by a method for producing a positive electrode material comprising at least one Na-based solid crystalline phase selected in the group consisting of Na-based solid crystalline P'2-phases, Na-based solid crystalline phases of formula Na₍₃₊ₓ₎V₂(PO₄)₃ with 0<x≤3 and Na-based solid crystalline phases of formula Na_{(3+y)}V₂(PO₄)₂F₃ with 0<y≤3, for a battery using sodium ions as electrochemical vector, said method comprising at least one step of ball milling a powder of Na₃P with a powder of at least one positive-electrode active material capable of inserting sodium ions reversibly and selected in the group consisting of solid Na-based solid crystalline P2-phases, Na₃V₂(PO₄)₃ and Na₃V₂(PO₄)₂F₃, said step of ball milling being carried out in a dry atmosphere and without heating.

Thanks to this method, it is now possible to prepare a positive electrode material comprising at least one Na-based solid crystalline phase which is Na-enriched by comparison with the positive-electrode active material capable of inserting sodium ions reversibly (i.e. the starting positive-electrode active material). When the obtained positive electrode material is then used as active material of a positive electrode, it can liberate some Na ions to compensate for the irreversibility of the negative carbon electrode, hence increasing the overall energy density (a reduction of more than 50 % of the irreversible capacity is obtained). Moreover, the P atoms remaining after the first charge of the battery are in solid form into the electrode material rather than in volatile form (as compared to the use of NaN₃). Another advantage is that P has a molecular weight of 31 g and is able to bring 3 Na ions while, in the case of NaN₃, 3 N atoms are needed to bring only 1 Na ion.

According to the present invention, the expression "Na-based solid crystalline P2-phases" refers to P2 type layered crystalline Na-phases comprising Na and at least one oxide of at least one element selected from the group consisting of Fe, Mn, Co, Ni, P, S, Mn, V, Ti.

According to the present invention, the expression "Na-based solid crystalline P'2-phases" refers to P'2 type layered crystalline Na-phases comprising Na and at least one oxide of at least one element selected from the group consisting of Fe, Mn, Co, Ni, P, S, Mn, V, Ti, and in which the amount of sodium per formula after the ball milling process has been increased with regard to the amount of sodium initially present in the corresponding P2-phase.

Within the meaning of the present invention, the expression "dry atmosphere" means that the atmosphere is anhydrous or moisture-free. Preferably, the atmosphere contains less than 20 ppm of water.

Within the meaning of the present invention, the expression "without heating" means that the method is implemented without any external source of heating.

In other terms, it is possible that the ball milling step involves a heating (or temporary heating) of the reactants during said ball milling, for example due to friction or exothermic reactions. However, the heating is inherent to said ball milling step and not to an external source of heating.

The Na-based solid crystalline P2-phases may be selected from the group consisting of Na_{0,67}Fe_{0.5}Mn_{0.5}O₂, Na_{0.67}MnO₂, Na_{0.74}CoO₂, Na_{0.67}Co_{0.67}Mn_{0.33}O₂, Na_{0.67}Ni_{0.25}Mn_{0.75}O₂ and Na_{0.67}Ni_{1/3}Mn_{2/3}O₂. They lead respectively, after the ball-milling step with Na₃P according to the process of the present invention, to the following corresponding Na-based solid crystalline P'2-phases NaFe_{0.5}Mn_{0.5}O₂, NaMnO₂, NaCoO₂, NaCo_{0.67}Mn_{0.33}O₂, NaNi_{0.25}Mn_{0.75}O₂ and NaNi_{1/3}Mn_{2/3}O₂.

Among the positive-electrode active materials capable of inserting sodium ions reversibly and used in the ball milling step, one can more particularly mention Na₃V₂(PO₄)₃, Na₃V₂(PO₄)₂F₃, Na_{0.67}Fe_{0.5}Mn_{0.5}O₂, Na_{0.67}MnO₂, Na_{0.74}CoO₂, Na_{0.67}Co_{0.67}Mn_{0.33}O₂ , Na_{0.67}Ni_{0.25}Mn_{0.75}O₂ and Na_{0.67}Ni_{1/3}Mn_{2/3}O₂.

According to a preferred embodiment of the present invention, said positive-electrode active material is Na_{0.67}Fe_{0.5}Mn_{0.5}O₂ or Na₃V₂(PO₄)₂F₃ or Na₃V₂(PO₄)₃.

In one embodiment of the invention, x is preferably such that 0<x≤1, and more preferably such that x = 1.

In one embodiment of the invention, y is preferably such that 0<y≤1, and more preferably such that y = 1.

According to a particulate and preferred embodiment of the present invention, the process is used to prepare:
i) NaFe_{0.5}Mn_{0.5}O₂ and the ball milling step is carried out with Na₃P and powder of Na_{0,67}Fe_{0.5}Mn_{0.5}O₂; or
ii) Na₍₃₊ₓ₎V₂(PO₄)₃ with 0<x≤3 and the ball milling step is carried out with Na₃P and powder of Na₃V₂(PO₄)₃; or
iii) Na_{(3+y)}V₂(PO₄)₂F₃ with 0<y≤3 and the ball milling step is carried out with Na₃P and powder of Na₃V₂(PO₄)₂F₃.

The amount of Na₃P preferably varies from 2 w% to 40 w%, with regard to the weight of positive electrode active material. In particular, the amount of Na₃P can be adjusted depending on how many Na are required to compensate the irreversible capacities.According to a particulate embodiment of the present invention, the ball milling step can be performed in the presence of an electronically conducting agent in powder form, such as carbon powder.

In that case, the powder of electronically conductive agent can be added at any time of the ball milling step. The amount of electronically conductive agent can vary from about 2 to 40 weight % with regard to the total amount of powder materials (powders of Na₃P and positive electrode active material), and more preferably from about 5 to 15 weight %.

The ball milling step allows the obtaining of the positive electrode material comprising at least one Na-based solid crystalline phase selected in the group consisting of Na-based solid crystalline P'2-phases, Na-based solid crystalline phases of formula Na₍₃₊ₓ₎V₂(PO₄)₃ with 0<x≤3 and Na-based solid crystalline phases of formula Na_{(3+y)}V₂(PO₄)₂F₃ with 0<y≤3.

According to a particulate and preferred embodiment of the present invention, the step of ball-milling is carried out with an inert gas such as argon or nitrogen, and more preferably in a glove box filled with said inert gas. According to a particulate embodiment of the present invention, argon is preferred.

The step of ball-milling is preferably performed at a temperature ranging from 20 to 300 °C, and more preferably from 25 to 80°C. Indeed, this ball-milling temperature is inherent to ball-milling process and no external source of heating is used to provide such temperatures.

According to an even more preferred embodiment of the present invention, the ball-milling step is carried out in a hard steel ball-miller jar containing a weight of milling-balls (W_{mb}) such as the weight ratio W_{mb}/Wₛ, with Wₛ being the total weight of powder materials contained in the jar (Na₃P powder, positive-electrode active material and optionally powder of an electronically conductive agent), ranges from about 10 to 60, preferably from about 20 to 60, and more preferably from about 30 to 50 or from about 20 to 40.

The volume of solid materials into the ball-miller is preferably 1/3 lower than the volume of the ball-miller jar.

The process according to the invention can be carried out in a ball-miller operating by vibrating movements of the balls in the three spatial directions or in a ball-miller operating by centrifuging movements of the balls.

As an example of ball-miller operating by vibrating movements of the balls, one can mention the ball-miller sold under the reference 8000M by Spex® comprising a metallic jar having an intern volume of 30 cm³ and a vibration frequency set at 875 cycles/minute (clamp speed).

As an example of ball-miller operating by centrifuging movements of the balls (planetary ball-miller), one can mention the ball-miller sold under the reference PM 100 by Retsch. This ball-miller operates at a speed ratio of 1/(-1) and a rotation speed up to 1000 rotations per minute (rpm). In this type of ball-miller, grinding is essentially carried out thanks to the balls that crush the powders and solids against the inner wall of the jar. Grinding is therefore essentially carried out by pressure and friction. The combination of impact forces and friction forces ensures a very high and efficient degree of grinding of planetary ball-millers.

When the ball-milling step of the process of the invention is performed in a ball-miller operating by centrifuging movements of the balls, the rotation speed is preferably set at a value ranging from about 200 and 1000 rpm, and more preferably from about 400 and 650 rpm.

The duration of the ball-milling step may vary depending on the rotation speed set for the ball-miller and on the amount of solid materials to grind. In order to avoid a temperature rise, the ball-milling step can be performed in several grinding sequences, said sequences being separated by breaks allowing the decrease of the temperature inside the jar. As an example, when a Spex® 8000M or Retsch PM 100 ball miller is used, the ball-milling step can be carried out according to a sequence of alternating series of 30 minutes of grinding and 15 minutes of break.

In said ball-millers, the effective duration of the ball-milling step (not including breaking times) can vary from about 0.1 to 50 hours, preferably from about 0.1 to 5 hours, more preferably from about 0.2 to 5 hours, and more preferably from about 0.2 to 2 hours.

The molar ratio Na₃P/positive-electrode active material capable of inserting sodium ions reversibly can generally vary from about 0.05 to about 2.

According to a particulate and preferred embodiment of the present invention, the process is used to prepare NaFe_{0.5}Mn_{0.5}O₂ and the ball milling step is carried out with Na₃P and Na_{0,67}Fe_{0.5}Mn_{0.5}O₂ for about 0.5 h to about 5 h and with a molar ratio of Na₃P/Na_{0,67}Fe_{0.5}Mn_{0.5}O₂ varying from about 0.11 to about 0.30. These conditions lead to a positive electrode material essentially comprising NaFe_{0.5}Mn_{0.5}O₂.

According to another particulate and preferred embodiment of the present invention, the process is used to prepare Na₄V₂(PO₄)₃ (i.e. Na₍₃₊ₓ₎V₂(PO₄)₃ in which x = 1) and the ball milling step is carried out with Na₃P and Na₃V₂(PO₄)₃ for about 1h to about 5h and with a molar ratio of Na₃P/Na₃V₂(PO₄)₃ varying from about 0.33 to about 1.0. These conditions lead to a positive electrode material essentially comprising Na₄V₂(PO₄)₃.

According to another particulate and preferred embodiment of the present invention, the process is used to prepare Na₄V₂(PO₄)₂F₃ (i.e. Na_{(3+y)}V₂(PO₄)₂F₃ in which y = 1) and the ball milling step is carried out with Na₃P and Na₃V₂(PO₄)₂F₃ for about 1 h to about 5 h and with a molar ratio of Na₃P/ Na₃V₂(PO₄)₂F₃ varying from about 0.33 to about 1.0. These conditions lead to a positive electrode material essentially comprising Na₄V₂(PO₄)₂F₃.

It is noted that depending on the molar ratio of Na₃P/positive-electrode active material capable of inserting sodium ions reversibly used in the ball milling step and/or the duration of said ball milling step, it is possible to obtain a positive electrode material comprising said at least one Na-based solid crystalline phase as defined in the present invention and eventually further comprising either Na₃P and/or the starting positive-electrode active material as defined in the present invention.

As an example, the process can be used to prepare Na₄V₂(PO₄)₂F₃ (i.e. Na_{(3+y)}V₂(PO₄)₂F₃ in which y = 1) in mixture with Na₃V₂(PO₄)₂F₃ and the ball milling step is carried out with Na₃P and Na₃V₂(PO₄)₃ for about 0.5 h to about 3 h and with a molar ratio of Na₃P/Na₃V₂(PO₄)₃ varying from about 0.1 to about 0.5. These conditions lead to a positive electrode material comprising Na₄V₂(PO₄)₂F₃ and Na₃V₂(PO₄)₂F₃ which can then be used as a positive electrode composite material.

In one embodiment, a molar excess of Na₃P with respect to the starting positive-electrode active material is used in the ball milling step so that the obtained positive electrode material comprises the at least one Na-based solid crystalline phase as defined in the present invention and Na₃P. The excess of Na₃P can thus compensate the loss of sodium during the first cycle and improve the energy density of the battery.

The positive electrode material obtained at the end of the process can be used immediately or stored, preferably under an inert atmosphere.

In another embodiment, and preferably when the ball milling step leads to a positive electrode material essentially comprising the at least one Na-based solid crystalline phase as defined in the invention, the process can further comprise a step of mixing (e.g. by short time ball milling or by simple mixing) Na₃P with the positive electrode material comprising at least one Na-based solid crystalline phase selected in the group consisting of Na-based solid crystalline P'2-phases, Na-based solid crystalline phases of formula Na₍₃₊ₓ₎V₂(PO₄)₃ with 0<x≤3 and Na-based solid crystalline phases of formula Na_{(3+y)}V₂(PO₄)₂F₃ with 0<y≤3, so as to form a positive-electrode composite material.

Short time ball milling refers to ball milling during 10 min approximately.

Amounts of about 10% by weight of Na₃P with respect to the weight of said positive electrode material are generally used.

This step leads to a positive electrode composite material Na₃P/positive electrode material, and preferably to a positive electrode composite material Na₃P/Na-based solid crystalline P'2-phases or Na₃P/Na-based solid crystalline phases of formula Na₍₃₊ₓ₎V₂(PO₄)₃ with 0<x≤3 or Na₃P/Na-based solid crystalline phases of formula Na_{(3+y)}V₂(PO₄)₂F₃ with 0<y≤3.

The positive electrode material obtained according to the process of the invention can be used as positive electrode active material in batteries operating by circulation of Na ions.

The present invention is illustrated in more detail in the examples below, but it is not limited to said examples.

### Example 1

### Preparation of Na₄V₂(PO₄)₂F₃ by ball milling with Na₃P

### 1) Preparation of Na₃V₂(PO₄)₂F₃

Na₃V₂(PO₄)₂F₃ was first prepared by traditional solid state reactions according to the method disclosed by L. Croguennec et al. (Chemistry of Materials, 2014, 26, 4238-4247).

### 2) Preparation of Na₃P by ball-milling

Stoichiometric amounts of metallic sodium as bulk (1.38g, Sigma) and red phosphorus (0.62g, Alfa, 325 mesh) were filled into a hard steel ball-milled jar of a Spex® 8000M ball-miller (30 cm³) in an Ar-filled glove box and equipped with seven hard steel balls, each having a weight of 7 g and a diameter of 12 mm. These solid materials were ball milled for 2-10 h to obtain Na₃P particles.

### 3) Preparation of Na₄V₂(PO₄)₂F₃

Na₃V₂(PO₄)₂F₃ were ball milled with excess amount of Na₃P (1 Na₃P per Na₃V₂(PO₄)₂F₃) to make Na₄V₂(PO₄)₂F₃. 1.0 g of Na₃V₂(PO₄)₂F₃ and 0.24 g of Na₃P were filled into a hard steel ball-milled jar (30 cm³) (Spex® 8000M) in an Ar-filled glove box and equipped with four hard steel balls, each having a weight of 7 g and a diameter of 12 mm. Na₄V₂(PO₄)₂F₃ was obtained after 3 h of ball milling.

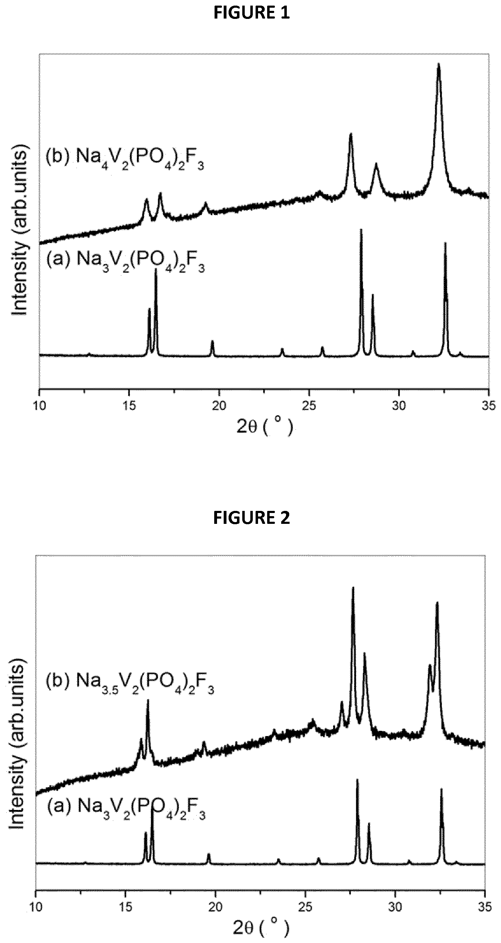

The XRD patterns of Na₄V₂(PO₄)₂F₃ thus obtained and of initial Na₃V₂(PO₄)₂F₃ are given in figure 1 annexed [intensity (in arbitrary units) as a function of angle 2θ (in degrees)].

### Example 2

### Preparation of Na₄V₂(PO₄)₂F₃ (in mixture with Na₃V₂(PO₄)₂F₃) by ball milling with Na₃P

Na₃V₂(PO₄)₂F₃ and Na₃P were prepared according to example 1.

Na₃V₂(PO₄)₂F₃ was ball milled with stoichiometric amount of Na₃P prepared according to the method given in step 2) of example 1 (0.167 Na₃P per Na₃V₂(PO₄)₂F₃) to make Na₄V₂(PO₄)₂F₃ in mixture with Na₃V₂(PO₄)₂F₃. 1.0 g of Na₃V₂(PO₄)₂F₃ and 0.04 g of Na₃P were filled into a hard steel ball-milled jar (30 cm³) (Spex® 8000M) in an Ar-filled glove box and equipped with four hard steel balls, each having a weight of 7 g and a diameter of 12 mm. An intimate mixture of 0.5 mole of Na₃V₂(PO₄)₂F₃ (starting material) and 0.5 mole Na₄V₂(PO₄)₂F₃ was obtained after 3 h of ball milling. This intimate mixture which represents a composite material can be used as an active material.

The XRD patterns of the composite material thus obtained and of initial Na₃V₂(PO₄)₂F₃ are given in figure 2 annexed [intensity (in arbitrary units) as a function of angle 2θ (in degrees)].

### Example 3

### Preparation of Na₁Fe_{0.5}Mn_{0.5}O₂ by ball-milling with Na₃P

### 1) Preparation of Na_{0.67}Fe_{0.5}Mn_{0.5}O₂

Firstly, Na_{0.67}Fe_{0.5}Mn_{0.5}O₂ (denoted Na_{0.67}FMO) was prepared by solid state reaction according to the method reported by S Komaba et al. (Nature Materials, 2012, 11, 512).

### 2) Preparation of Na₁Fe_{0.5}Mn_{0.5}O₂

Na_{0.67}Fe_{0.5}Mn_{0.5}O₂ was ball milled with excess amount of Na₃P prepared according to the method given in step 2) of example 1 (0.22 Na₃P per Na_{0.67}Fe_{0.5}Mn_{0.5}O₂) to make Na₁Fe_{0.5}Mn_{0.5}O₂. 1 g of Na_{0.67}FMO and 0.21 g of Na₃P were filled into a hard steel ball-milled jar (30 cm³) (Spex® 8000M) in an Ar-filled glove box and equipped with four hard steel balls, each having a weight of 7g and a diameter of 12 mm. Na₁Fe_{0.5}Mn_{0.5}O₂ was obtained after ball milling for 2 h.

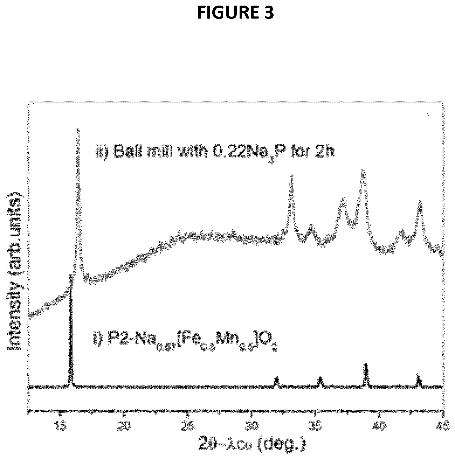

The XRD patterns of Na₁Fe_{0.5}Mn_{0.5}O₂ thus obtained and of initial Na_{0.67}Fe_{0.5}Mn_{0.5}O₂ are given in figure 3 annexed [intensity (in arbitrary units) as a function of angle 2θ (in degrees)].

### Example 4

### Preparation of Na₁Fe_{0.5}Mn_{0.5}O₂/Na₃P positive-electrode composite material by ball-milling with Na₃P and further addition of Na₃P

Na₁Fe_{0.5}Mn_{0.5}O₂ was prepared according to example 3.

Na₁Fe_{0.5}Mn_{0.5}O₂ was mixed by short time ball milling (i.e. during 10 min approximately) with 10% by weight of Na₃P, so as to form a positive-electrode composite material which has improved electrochemical performances compared to Na₁Fe_{0.5}Mn_{0.5}O₂ "as such" or Na_{0.67}Fe_{0.5}Mn_{0.5}O₂.

## Claims

1. A method for producing a positive electrode material comprising at least one Na-based solid crystalline phase selected in the group consisting of Na-based crystalline P'2-phases, Na-based solid crystalline phases of formula Na₍₃₊ₓ₎V₂(PO₄)₃ with 0<x≤3 and Na-based solid crystalline phases of formula Na_{(3+y)}V₂(PO₄)₂F₃ with 0<y≤3, for a battery using sodium ions as electrochemical vector, said method comprising at least one step of ball milling a powder of Na₃P with a powder of at least one positive-electrode active material capable of inserting sodium ions reversibly and selected in the group consisting of solid Na-based crystalline P2-phases, Na₃V₂(PO₄)₃ and Na₃V₂(PO₄)₂F₃, said step of ball milling being carried out in a dry atmosphere and without any external source of heating.

2. The method of claim 1, wherein the Na-based solid crystalline P2-phases are selected from the group consisting of Na_{0,67}Fe_{0.5}Mn_{0.5}O₂, Na_{0.67}MnO₂, Na_{0.74}CoO₂, Na_{0.67}Co_{0.67}Mn_{0.33}O₂, Na_{0.67}Ni_{0.25}Mn_{0.75}O₂ and Na_{0.67}Ni_{1/3}Mn_{2/3}O₂.

3. The method according to claim 1 or 2, wherein the positive-electrode active material capable of inserting sodium ions reversibly is selected from the group consisting of Na₃V₂(PO₄)₃, Na₃V₂(PO₄)₂F₃, Na_{0.67}Fe_{0.5}Mn_{0.5}O₂, Na_{0.67}MnO₂, Na_{0.74}CoO₂, Na_{0.67}Co_{0.67}Mn_{0.33}O₂, Na_{0.67}Ni_{0.25}Mn_{0.75}O₂ and Na_{0.67}Ni_{1/3}Mn_{2/3}O₂.

4. The method according to anyone of claims 1 to 3, wherein the amount of Na₃P varies from 2 w% to 40 w% with regard to the weight of positive-electrode active material.

5. The method according to anyone of claims 1 to 4, wherein the ball milling step can be performed in the presence of an electronically conducting agent in powder form.

6. The method according to anyone of claims 1 to 5, wherein the molar ratio of Na₃P/positive-electrode active material varies from 0.05 to 2.

7. The method according to anyone of claim 1 to 6, wherein the step of ball-milling is carried out with an inert gas.

8. The method according to anyone of claims 1 to 7, wherein the step of ball-milling is performed at a temperature ranging from 25 to 80°C.

9. The method according to anyone of claims 1 to 8, wherein the ball-milling step is carried out in a hard steel ball-miller jar containing a weight of milling-balls (W_{mb}) such as the weight ratio W_{mb}/Wₛ, with Wₛ being the total weight of powder materials contained in the jar, ranges from 10 to 60.

10. The method according to anyone of claims 1 to 9, wherein the ball milling step is carried out in a ball-miller operating by centrifuging movements of the balls at a rotation speed set at a value ranging from 200 and 1000 rotations per minute.

11. The method according to anyone of claims 1 to 10, wherein the effective duration of the ball-milling step varies from 0.1 to 50 hours.

12. The method according to anyone of claims 1 to 11, wherein the process is used to prepare NaFe_{0.5}Mn_{0.5}O₂ and the ball milling step is carried out with Na₃P and Na_{0,67}Fe_{0.5}Mn_{0.5}O₂ for 0.5 h to 5 h and with a molar ratio of Na₃P/Na_{0,67}Fe_{0.5}Mn_{0.5}O₂ varying from 0.11 to 0.30.

13. The method according to anyone of claims 1 to 11, wherein the process is used to prepare Na₄V₂(PO₄)₃ and the ball milling step is carried out with Na₃P and Na₃V₂(PO₄)₃ for 1 h to 5 h and with a molar ratio of Na₃P/Na₃V₂(PO₄)₃ varying from 0.33 to 1.0.

14. The method according to anyone of claims 1 to 11, wherein the process is used to prepare Na₄V₂(PO₄)₂F₃ and the ball milling step is carried out with Na₃P and Na₃V₂(PO₄)₂F₃ for 1 h to 5 h and with a molar ratio of Na₃P/Na₃V₂(PO₄)₃ varying from 0.33 to 1.0.

15. The method according to anyone of claims 1 to 14, wherein the process further comprises a step of mixing Na₃P with the positive electrode material comprising at least one Na-based solid crystalline phase selected in the group consisting of Na-based crystalline P'2-phases, Na-based solid crystalline phases of formula Na₍₃₊ₓ₎V₂(PO₄)₃ with 0<x≤3 and Na-based solid crystalline phases of formula Na_{(3+y)}V₂(PO₄)₂F₃ with 0<y≤3, so as to form a positive electrode composite material.

## Patentansprüche

1. Verfahren zum Herstellen eines Positivelektrodenmaterials, das zumindest eine Na-basierte feste kristalline Phase umfasst, die aus der Gruppe ausgewählt ist, bestehend aus Na-basierten kristallinen P'2-Phasen, Na-basierten festen kristallinen Phasen der Formel Na₍₃₊ₓ₎V₂(PO₄)₃, wobei 0 < x ≤ 3, und Na-basierten festen kristallinen Phasen der Formel Na_{(3+y)}V₂(PO₄)₂F₃, wobei 0 < y ≤ 3, für eine Batterie unter Verwendung von Natriumionen als elektrochemischen Vektor, wobei das Verfahren zumindest einen Schritt des Kugelmahlens eines Pulvers von Na₃P mit einem Pulver zumindest eines Positivelektrodenaktivmaterials umfasst, das in der Lage ist, Natriumionen reversibel einzubringen, und ausgewählt aus der Gruppe, bestehend aus festen Na-basierten kristallinen P2-Phasen, Na₃V₂(PO₄)₃ und Na₃V₂(PO₄)₂F₃, wobei der Schritt des Kugelmahlens in einer trockenen Atmosphäre und ohne externe Heizquelle durchgeführt wird.

2. Verfahren nach Anspruch 1, wobei die Na-basierten festen kristallinen P2-Phasen aus der Gruppe ausgewählt sind, bestehend aus Na_{0,67}Fe_{0,5}Mn_{0,5}O₂, Na_{0,67}MnO₂, Na_{0,74}CoO₂, Na_{0,67}Co_{0,67}Mn_{0,33}O₂, Na_{0,67}Ni_{0,25}Mn_{0,75}O₂ und Na_{0,67}Ni_{1/3}Mn_{2/3}O₂.

3. Verfahren nach Anspruch 1 oder 2, wobei das Positivelektrodenaktivmaterial, das in der Lage ist, Natriumionen reversibel einzubringen, aus der Gruppe ausgewählt ist, bestehend aus Na₃V₂(PO₄)₃, Na₃V₂(PO₄)₂F₃, Na_{0,67}Fe_{0,5}Mn_{0,5}O₂, Na_{0,67}MnO₂, Na_{0,74}CoO₂, Na_{0,67}Co_{0,67}Mn_{0,33}O₂, Na_{0,67}Ni_{0,25}Mn_{0,75}O₂ und Na_{0,67}Ni_{1/3}Mn_{2/3}O₂.

4. Verfahren nach einem der Ansprüche 1 bis 3, wobei die Menge an Na₃P bezogen auf das Gewicht des Positivelektrodenaktivmaterials von 2 Gew.-% bis 40 Gew.-% variiert.

5. Verfahren nach einem der Ansprüche 1 bis 4, wobei der Kugelmahlschritt in Gegenwart eines elektronisch leitenden Mittels in Pulverform durchgeführt werden kann.

6. Verfahren nach einem der Ansprüche 1 bis 5, wobei das Molverhältnis von Na₃P zu Positivelektrodenaktivmaterial von 0,05 bis 2 variiert.

7. Verfahren nach einem der Ansprüche 1 bis 6, wobei der Schritt des Kugelmahlens mit Inertgas durchgeführt wird.

8. Verfahren nach einem der Ansprüche 1 bis 7, wobei der Schritt des Kugelmahlens bei einer Temperatur im Bereich von 25 bis 80 °C durchgeführt wird.

9. Verfahren nach einem der Ansprüche 1 bis 8, wobei der Kugelmahlschritt in einem Kugelmühlentiegel aus hartem Stahl durchgeführt wird, der ein Gewicht von Mahlkugeln (W_{mb}) enthält, so dass das Gewichtsverhältnis W_{mb}/Wₛ, wobei Wₛ das Gesamtgewicht an Pulvermaterialien ist, die im Tiegel enthalten sind, im Bereich von 10 bis 60 liegt.

10. Verfahren nach einem der Ansprüche 1 bis 9, wobei der Kugelmahlschritt in einer Kugelmühle durchgeführt wird, die durch Zentrifugalbewegungen der Kugeln in einer Drehgeschwindigkeit arbeitet, die auf einen Wert im Bereich von 200 bis 1000 Umdrehungen pro Minute eingestellt ist.

11. Verfahren nach einem der Ansprüche 1 bis 10, wobei die effektive Dauer des Kugelmahlschritts von 0,1 bis 50 Stunden variiert.

12. Verfahren nach einem der Ansprüche 1 bis 11, wobei der Prozess verwendet wird, um NaFe_{0,5}Mn_{0,5}O₂ herzustellen, und der Kugelmahlschritt mit Na₃P und Na_{0,67}Fe_{0,5}Mn_{0,5}O₂ während 0,5 h bis 5 h durchgeführt wird, und wobei ein Molverhältnis von Na₃P/Na_{0,67}Fe_{0,5}Mn_{0,5}O₂ von 0,11 bis 0,30 variiert.

13. Verfahren nach einem der Ansprüche 1 bis 11, wobei der Prozess verwendet wird, um Na₄V₂(PO₄)₃ herzustellen, und der Kugelmahlschritt mit Na₃P und Na₃V₂(PO₄)₃ während 1 h bis 5 h durchgeführt wird, und wobei ein Molverhältnis von Na₃P/Na₃V₂(PO₄)₃ von 0,33 bis 1,0 variiert.

14. Verfahren nach einem der Ansprüche 1 bis 11, wobei der Prozess verwendet wird, um Na₄V₂(PO₄)₂F₃ herzustellen, und der Kugelmahlschritt mit Na₃P und Na₃V₂(PO₄)₂F₃ während 1 h bis 5 h durchgeführt wird, und wobei ein Molverhältnis von Na₃P/Na₃V₂(PO₄)₃ von 0,33 bis 1,0 variiert.

15. Verfahren nach einem der Ansprüche 1 bis 14, wobei der Prozess ferner einen Schritt des Mischens von Na₃P mit dem Positivelektrodenmaterial umfasst, das zumindest eine Na-basierte feste kristalline Phase umfasst, die aus der Gruppe ausgewählt ist, bestehend aus Na-basierten kristallinen P'2-Phasen, Na-basierten festen kristallinen Phasen der Formel Na₍₃₊ₓ₎V₂(PO₄)₃, wobei 0 < x ≤ 3, und Na-basierten festen kristallinen Phasen der Formel Na_{(3+y)}V₂(PO₄)₂F₃, wobei 0 < y ≤ 3, um ein Positivelektrodenverbundmaterial zu bilden.

## Revendications

1. Procédé pour produire un matériau d'électrode positive comprenant au moins une phase cristalline solide à base de Na choisie dans le groupe constitué par les phases cristallines P'2 à base de Na, les phases cristallines solides à base de Na de formule Na₍₃₊ₓ)V₂(PO₄)₃ où 0 < x ≤ 3 et les phases cristallines solides à base de Na de formule Na_{(3+y)}V₂(PO₄)₂F₃ où 0 < y ≤ 3, pour une batterie utilisant des ions sodium en tant que vecteur électrochimique, ledit procédé comprenant au moins une étape de broyage à boulets d'une poudre de Na₃P avec une poudre d'au moins un matériau actif d'électrode positive capable d'insérer des ions sodium de manière réversible et choisi dans le groupe constitué par les phases cristallines solides P2 à base de Na, Na₆V₂(PO₄)₃ et Na₃V₂(PO₄)₂F₃, ladite étape de broyage à boulets étant mise en oeuvre dans une atmosphère sèche et sans aucune source externe de chauffage.

2. Procédé selon la revendication 1, dans lequel les phases cristallines solides P2 à base de Na sont choisies dans le groupe constitué par Na_{0,67}Fe_{0,5}Mn_{0,5}O₂, Na_{0,67}MnO₂, Na_{0,74}CoO₂, Na_{0,67}Co_{0,67}Mn_{0,33}O₂, Na_{0,67}Ni_{0,25}Mn_{0,75}O₂ et Na_{0,67}Ni_{1/3}Mn_{2/3}O₂.

3. Procédé selon la revendication 1 ou 2, dans lequel le matériau actif d'électrode positive capable d'insérer des ions sodium de manière réversible est choisi dans le groupe constitué par Na₃V₂(PO₄)₃, Na₃V₂(PO₄)₂F₃, Na_{0,67}Fe_{0,5}Mn_{0,5}O₂, Na_{0,67}MnO₂, Na_{0,74}CoO₂, Na_{0,67}CO_{0,67}Mn_{0,33}O₂, Na_{0,67}Ni_{0,25}Mn_{0,75}O₂ et Na_{0,67}Ni_{1/3}Mn_{2/3}O₂.

4. Procédé selon l'une quelconque des revendications 1 à 3, dans lequel la quantité de Na₃P varie de 2 % en poids à 40 % en poids par rapport au poids du matériau actif d'électrode positive.

5. Procédé selon l'une quelconque des revendications 1 à 4, dans lequel l'étape de broyage à boulets peut être mise en oeuvre en présence d'un agent électroniquement conducteur sous forme de poudre.

6. Procédé selon l'une quelconque des revendications 1 à 5, dans lequel le rapport molaire Na₃P/ matériau actif d'électrode positive varie de 0,05 à 2.

7. Procédé selon l'une quelconque des revendications 1 à 6, dans lequel l'étape de broyage à boulets est mise en oeuvre avec un gaz inerte.

8. Procédé selon l'une quelconque des revendications 1 à 7, dans lequel l'étape de broyage à boulets est mise en oeuvre à une température située dans la plage allant de 25 à 80°C.

9. Procédé selon l'une quelconque des revendications 1 à 8, dans lequel l'étape de broyage à boulets est mise en oeuvre dans un pot de broyage à boulets en acier dur contenant un poids de boulets de broyage (W_{mb}) tel que le rapport en poids W_{mb}/Wₛ, où Wₛ est le poids total des matériaux en poudre contenus dans le pot, soit situé dans la plage allant de 10 à 60.

10. Procédé selon l'une quelconque des revendications 1 à 9, dans lequel l'étape de broyage à boulets est mise en oeuvre dans un broyeur à boulets fonctionnant par des mouvements centrifuges des boulets à une vitesse de rotation établie à une valeur située dans la plage allant de 200 à 1000 tours par minute.

11. Procédé selon l'une quelconque des revendications 1 à 10, dans lequel la durée effective de l'étape de broyage à boulets varie de 0,1 à 50 heures.

12. Procédé selon l'une quelconque des revendications 1 à 11, lequel procédé est utilisé pour préparer du NaFe_{0,5}Mn_{0,5}O₂ et où l'étape de broyage à boulets est mise en oeuvre avec du Na₃P et du Na_{0,67}Fe_{0,5}Mn_{0,5}O₂ pendant 0,5 heure à 5 heures et avec un rapport molaire Na₃P/Na_{0,67}Fe_{0,5}Mn_{0,5}O₂ variant de 0,11 à 0,30.

13. Procédé selon l'une quelconque des revendications 1 à 11, lequel procédé est utilisé pour préparer du Na₄V₂(PO₄)₃ et où l'étape de broyage à boulets est mise en oeuvre avec du Na₃P et du Na₃V₂(PO₄)₃ pendant 1 heure à 5 heures et avec un rapport molaire Na₃P/Na₃V₂(PO₄)₃ variant de 0,33 à 1,0.

14. Procédé selon l'une quelconque des revendications 1 à 11, lequel procédé est utilisé pour préparer du Na₄V₂(PO₄)₂F₃ et où l'étape de broyage à boulets est mise en oeuvre avec du Na₃P et du Na₃V₂(PO₄)₂F₃ pendant 1 heure à 5 heures et avec un rapport molaire Na₃P/Na₃V₂(PO₄)₃ variant de 0,33 à 1,0.

15. Procédé selon l'une quelconque des revendications 1 à 14, lequel procédé comprend en outre une étape de mélange de Na₃P avec le matériau d'électrode positive comprenant au moins une phase cristalline solide à base de Na choisie dans le groupe constitué par les phases cristallines P'2 à base de Na, les phases cristallines solides à base de Na de formule Na₍₃₊ₓ₎V₂(PO₄)₃ où 0 < x ≤ 3 et les phases cristallines solides à base de Na de formule Na_{(3+y)}V₂(PO₄)₂F₃ où 0 < y ≤ 3, de façon à former un matériau composite d'électrode positive.
